# EUROPEAN PATENT APPLICATION

(11) **EP 4 711 249 A1**
(43) Date of publication of application: **18.03.2026**
(21) Application number: 25200216.7
(22) Date of filing: 04.09.2025
(51) Int. Cl.: B62D 25/08, B62D 27/06, B62D 29/00, B62D 21/15

(54) **VEHICLE REAR PORTION STRUCTURE**

(30) Priority: 17.09.2024 JP 2024160436
(71) Applicant: TOYOTA JIDOSHA KABUSHIKI KAISHA, Toyota-shi, Aichi-ken 471-8571 (JP)
(72) Inventor: SHIMIZU, Kento, TOYOTA-SHI, AICHI-KEN, 471-8571 (JP); NAGINO, Yutaka, TOYOTA-SHI, AICHI-KEN, 471-8571 (JP)
(74) Representative: Cabinet Beau de Loménie

(57) **Abstract**

A vehicle rear portion structure (10) includes a framework member (20), a side member (40) and a floor member (32). The framework member (20) is integrally molded by casting and structures a rear portion of a vehicle body. The side member (40) extends in the vehicle front-and-rear direction and is attached to a rear portion of the framework member (20). The floor member (32) is provided at the vehicle upper side of the side member (40) and includes a long hole portion (38) with a length direction in the vehicle front-and-rear direction. The floor member (32) is fastened to the side member (40) by a fastening (18) that is inserted into a vehicle rear side region of the long hole portion (38).

## Description

### BACKGROUND

### Technical Field

The present invention relates to a vehicle rear portion structure.

### Related Art

A vehicle equipped with a framework member that is integrally molded by casting and structures a rear portion of the vehicle has been known since heretofore (for example, see Chinese Utility Model No. 216,916,052).

Side members that support a rear bumper reinforcement are attached to this framework member.

### SUMMARY

However, when a floor member is provided at a framework member structuring a rear portion of a vehicle and a side member is fixed to the floor member to be immovable toward the vehicle front side, at a time of a rear collision of the vehicle, particularly a time of a light collision, a load is transmitted from the side member to the floor member and the load is transmitted from the floor member to the framework member. As a result, the framework member may be deformed.

Accordingly, an object of the present disclosure is to provide, for a vehicle in which a rear portion of a vehicle body is structured by a framework member that is integrally molded by casting, a vehicle rear portion structure that may suppress deformation of the framework member at a time of a rear collision of the vehicle.

In order to achieve the object described above, a vehicle rear portion structure of a first aspect according to the present disclosure includes: a framework member that is integrally molded by casting and that structures a rear portion of a vehicle body; a side member that extends in a vehicle front-and-rear direction and that is attached to a rear portion of the framework member; and a floor member that is provided at a vehicle upper side of the side member and that includes a long hole portion with a length direction in the vehicle front-and-rear direction, in which the floor member is fastened to the side member by a fastening inserted into a vehicle rear side region of the long hole portion.

According to the vehicle rear portion structure of the first aspect, the side member extending in the vehicle front-and-rear direction is attached to the rear portion of the framework member that is integrally molded by casting and structures the rear portion of the vehicle. The floor member is provided at the vehicle upper side of the side member, and the long hole portion whose length direction is in the vehicle front-and-rear direction is formed in the floor member. The floor member is fastened to the side member by the fastening that is inserted into the vehicle rear side region of the long hole portion.

Therefore, when a load is applied to the side member at a time of a rear collision of the vehicle, the side member may move toward the vehicle front side along the long hole portion. Consequently, application of a load from the side member to the floor member is reduced, and application of a load from the floor member to the framework member is reduced. Thus, deformation of the framework member at the time of rear collision of the vehicle is suppressed. The term "rear collision" as used herein of course includes light collisions.

In a vehicle rear portion structure according to a second aspect, in the vehicle rear portion structure according to the first aspect, the floor member includes a hole portion at a vehicle front side of the long hole portion, and the floor member is fastened to the side member by a fastening inserted into the hole portion.

According to the vehicle rear portion structure of the second aspect, the floor member includes the hole portion at the vehicle front side of the long hole portion, and the side member is fastened by the fastening that is inserted into the hole portion. Therefore, at the time of rear collision of the vehicle, if a large load of a predetermined value or greater is applied, the load may be transmitted from the side member to the floor member, and may be transmitted from the floor member to the framework member. Thus, energy of the load may be absorbed by the framework member. Even when a load is applied from the vehicle lower side, such as when the vehicle is running on a bad road or the like, stiffness of the floor member with respect to the load is assured. Therefore, relative displacement of the floor member with respect to the framework member is suppressed.

In a vehicle rear portion structure according to a third aspect, in the vehicle rear portion structure according to the second aspect, the long hole portion and the hole portion are formed at positions that are in line along the vehicle front-and-rear direction.

According to the vehicle rear portion structure of the third aspect, the long hole portion and the hole portion are formed at positions that are in line along the vehicle front-and-rear direction. Therefore, at the time of rear collision of the vehicle, a load may be transmitted from the side member to the floor member more efficiently and transmitted from the floor member to the framework member more efficiently than in a structure in which the long hole portion and hole portion are formed to be offset in the vehicle width direction from positions that are in line along the vehicle front-and-rear direction.

In a vehicle rear portion structure according to a fourth aspect, in the vehicle rear portion structure according to the third aspect, a plurality of hole portions are formed in the vehicle front-and-rear direction.

According to the vehicle rear portion structure of the fourth aspect, the hole portions are plurally formed in the vehicle front-and-rear direction. Therefore, stiffness of the floor member with respect to a load applied from the vehicle lower side may be more effectively assured than in a structure in which only one hole portion is formed, and relative displacement of the floor member with respect to the framework member is suppressed more effectively.

In a vehicle rear portion structure according to a fifth aspect, in the vehicle rear portion structure according to the third aspect or the fourth aspect, the long hole portion and the hole portions are formed in at least two rows separated by a predetermined spacing in a vehicle width direction.

According to the vehicle rear portion structure of the fifth aspect, at least two rows of the long hole portion and the hole portions are formed, separated by the predetermined spacing in the vehicle width direction. Therefore, if a large load of a predetermined value or greater is applied at the time of rear collision of the vehicle, the load may be transmitted from the side member to the floor member more efficiently and transmitted from the floor member to the framework member more efficiently than in a structure in which only one row of the long hole portion and hole portions is formed. Furthermore, stiffness of the floor member with respect to a load applied from the vehicle lower side may be more effectively assured, and relative displacement of the floor member with respect to the framework member is suppressed more effectively.

In a vehicle rear portion structure according to a sixth aspect, in the vehicle rear portion structure according to the fifth aspect, the floor member includes a bead portion that extends in the vehicle front-and-rear direction between a plurality of long hole portions between the hole portions, or between any combination thereof.

According to the vehicle rear portion structure of the sixth aspect, the floor member includes the bead portion extending in the vehicle front-and-rear direction between the long hole portions and/or between the hole portions. Therefore, stiffness of the floor member with respect to a load applied from the vehicle lower side may be assured more effectively than in a structure in which no bead portion extending in the vehicle front-and-rear direction is formed at the floor member, and relative displacement of the floor member with respect to the framework member is suppressed more effectively.

In a vehicle rear portion structure according to a seventh aspect, in the vehicle rear portion structure according to any one of the first to sixth aspects, the side member is formed as a closed cross-sectional shape.

According to the vehicle rear portion structure of the seventh aspect, the side member is formed with a closed cross-sectional shape Therefore, stiffness of the side member with respect to a load applied at the time of rear collision of the vehicle is improved compared to a structure in which a side member is not formed in a closed cross-sectional shape, and an energy absorption amount is increased.

In a vehicle rear portion structure according to an eighth aspect, in the vehicle rear portion structure according to the seventh aspect, the side member includes a partition portion inside the closed cross-section.

According to the vehicle rear portion structure of the eighth aspect, the side member includes the partition portion inside the closed cross-section. Therefore, stiffness of the side member with respect to a load applied at the time of rear collision of the vehicle is further improved compared to a structure in which no partition portion is formed inside the closed cross-section of the side member, and the energy absorption amount is increased further.

In a vehicle rear portion structure according to a ninth aspect, in the vehicle rear portion structure according to the seventh aspect or the eighth aspect, a wall portion and a flange portion are formed at a rear portion of the framework member, the wall portion being perpendicular to the vehicle front-and-rear direction, and the flange portion protruding toward a vehicle rear side, and the side member is attached to the flange portion in a state in which the side member abuts against the wall portion.

According to the vehicle rear portion structure of the ninth aspect, the wall portion that is perpendicular to the vehicle front-and-rear direction and the flange portion that projects to the vehicle rear side are formed at the rear portion of the framework member. The side member is attached to the flange portion in the state in which the side member abuts against the wall portion. Therefore, a contact area of the side member with the framework member is assured, and pressure on the framework member caused by a load acting on the side member at the time of rear collision of the vehicle is reduced. Thus, localized application of the load to the framework member is suppressed, and the load is taken up by the framework member effectively. The meaning of the term "perpendicular" as used herein is intended to include substantial perpendicularity that is a little offset from the precise perpendicular.

In a vehicle rear portion structure according to a tenth aspect, in the vehicle rear portion structure according to any one of the seventh to ninth aspects, the side member is provided in a pair at left and right, and the side members support a bumper reinforcement that extends in a vehicle width direction.

According to the vehicle rear portion structure of the tenth aspect, the side members are provided as a pair at left and right and support the bumper reinforcement that extends in the vehicle width direction. Therefore, a load applied to the bumper reinforcement at the time of rear collision of the vehicle is efficiently distributed between and transmitted to the side members.

In a vehicle rear portion structure according to an eleventh aspect, in the vehicle rear portion structure according to any one of the first to tenth aspects, the long hole portion is formed in a shape whose width in the vehicle width direction decreases toward the vehicle front side.

According to the vehicle rear portion structure of the eleventh aspect, the long hole portion is formed in the shape whose width along the vehicle width direction decreases toward the vehicle front side. Therefore, the side member is suitably directed toward the vehicle front side by a load applied at the time of rear collision of the vehicle, and a load from the fastening is transmitted toward a vehicle front side effectively.

In a vehicle rear portion structure according to a twelfth aspect, in the vehicle rear portion structure according to any one of the first to tenth aspects, a vehicle front side region of the long hole portion s formed in an elliptical shape with a greater width in a vehicle width direction than the vehicle rear side region.

According to the vehicle rear portion structure of the twelfth aspect, the vehicle front side region of the long hole portion is formed in the elliptical shape that has greater width in the vehicle width direction than the vehicle rear side region of the long hole portion. Therefore, the side member is suitably directed toward the vehicle front side by a load applied at the time of rear collision of the vehicle, and a concentration of stress from the fastening is reduced.

A vehicle rear portion structure according to a thirteenth aspect includes: a framework member that is integrally molded by casting and that structures a rear portion of a vehicle body; a side member that extends in a vehicle front-and-rear direction and that is attached to a rear portion of the framework member; and a floor member that is provided at a vehicle upper side of the side member and that includes a hole portion, in which: the floor member is fastened to the side member by a fastening inserted into the hole portion; and a weakened portion is formed at an edge portion at a vehicle front side of the hole portion, the weakened portion allowing the floor member to be ruptured by the fastening when a load is applied from a vehicle rear side.

According to the vehicle rear portion structure of the thirteenth aspect, the side member extending in the vehicle front-and-rear direction is attached to the rear portion of the framework member that is integrally molded by casting and structures the rear portion of the vehicle. The floor member is provided at the vehicle upper side of the side member, and the hole portion is formed in the floor member. The floor member is fastened to the side member by the fastening that is inserted into the hole portion. The weakened portion, at which the floor member is to be ruptured by the fastening when a load is applied from the vehicle rear side, is formed at the edge portion at the vehicle front side of the hole portion.

Therefore, when a load is applied to the side member at a time of a rear collision of the vehicle, the side member may move toward the vehicle front side while the weakened portion is ruptured by the fastening. Consequently, application of a load from the side member to the floor member is reduced, and application of a load from the floor member to the framework member is reduced. Thus, deformation of the framework member at the time of rear collision of the vehicle is suppressed. The term "rear collision" as used herein of course includes light collisions.

According to the present disclosure as described above, in a vehicle in which a rear portion of a vehicle body is structured by a framework member that is integrally molded by casting, deformation of the framework member at a time of a rear collision of the vehicle is suppressed.

### BRIEF DESCRIPTION OF THE DRAWINGS

Fig. 1 is a schematic perspective view showing a vehicle rear portion structure according to the present exemplary embodiment, seen from the upper-rear side.
Fig. 2 is a schematic perspective view showing the vehicle rear portion structure according to the present exemplary embodiment, seen from the upper-front side.
Fig. 3 is a schematic plan view showing the vehicle rear portion structure according to the present exemplary embodiment.
Fig. 4 is a schematic exploded perspective view showing the vehicle rear portion structure according to the present exemplary embodiment, seen from the lower-rear side.
Fig. 5 is a schematic perspective view showing the vehicle rear portion structure according to the present exemplary embodiment, seen from the lower-rear side.
Fig. 6 is a schematic sectional view of a rear side member structuring the vehicle rear portion structure according to the present exemplary embodiment.
Fig. 7A is a schematic plan view showing a shape of a long hole portion in a rear floor side panel structuring the vehicle rear portion structure according to the present exemplary embodiment.
Fig. 7B is a schematic plan view showing a shape of a variant example of the long hole portion in the rear floor side panel structuring the vehicle rear portion structure according to the present exemplary embodiment.
Fig. 8A is a schematic plan view showing a weakened portion of the rear side floor panel structuring the vehicle rear portion structure according to the present exemplary embodiment.
Fig. 8B is a schematic plan view showing a variant example of the weakened portion of the rear side floor panel structuring the vehicle rear portion structure according to the present exemplary embodiment.

### DETAILED DESCRIPTION

Below, an exemplary embodiment relating to the present disclosure is described in detail in accordance with the drawings. For convenience of description, the arrow UP that is shown where appropriate in the drawings indicates a vehicle upper direction, the arrow FR indicates a vehicle front direction, and the arrow RH indicates a vehicle right direction. Thus, in the following descriptions, where the directions upper and lower, front and rear, and left and right are recited without being particularly specified, the same represent upper and lower in the vehicle vertical direction, front and rear in the vehicle front-and-rear direction, and left and right in the vehicle left-and-right direction (the vehicle width direction).

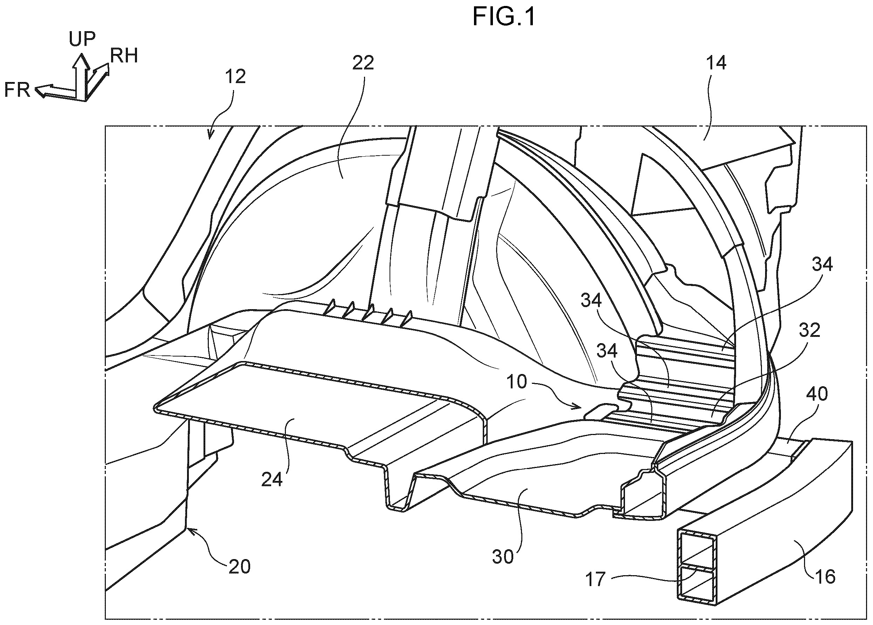

As shown in Fig. 1, a vehicle 12 is equipped with a vehicle rear portion structure 10 according to the present exemplary embodiment. The vehicle 12 includes a framework member (below referred to as a "vehicle body rear portion 20") that structures a rear portion of the vehicle body. The vehicle body rear portion 20 serving as the framework member is, for example, a cast item known as a gigacast, in which plural components are integrally molded by casting of an aluminum alloy or the like in a die.

Wheel houses 22 in shapes with left-and-right symmetry are integrally formed at vehicle width direction outer side end portions of the vehicle body rear portion 20. The wheel houses 22 are capable of accommodating respective left and right rear wheels. A side member outer panel 14 that structures an outer panel of the vehicle 12 is disposed at the vehicle width direction outer side of each wheel house 22. A floor portion 24 that structures a floor wall of a luggage compartment is integrally formed between the wheel houses 22 of the vehicle body rear portion 20.

As shown in Fig. 1 to Fig. 3, a rear floor panel 30 is provided at a vehicle width direction middle portion that is at the rear side relative to the floor portion 24. The rear floor panel 30 structures the floor wall of the luggage compartment together with the floor portion 24. Rear floor side panels 32 are provided at both the left and right sides of the rear floor panel 30. The rear floor side panels 32 serve as floor members that, together with the floor portion 24 and the rear floor panel 30, structure the floor wall of the luggage compartment. Thus, this structure may assure a large luggage compartment space.

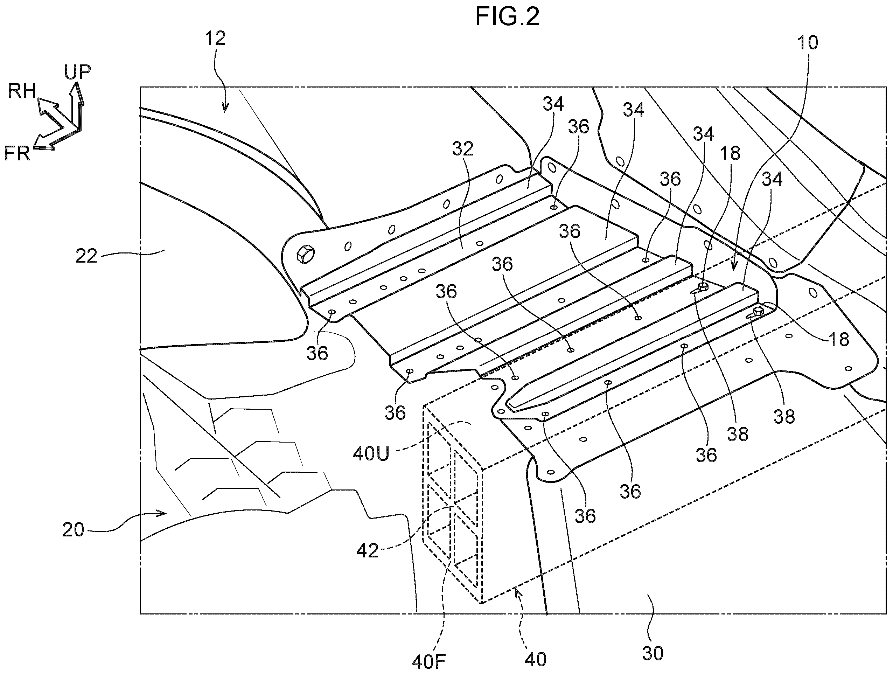

Plural upward beads 34 are formed at each rear floor side panel 32. The upward beads 34 serve as bead portions that extend in the front-and-rear direction and are separated by predetermined spacings in the vehicle width direction. Plural hole portions 36 for fastening (see Fig. 2) are formed at both the left and right sides of each upward bead 34. The hole portions 36 have circular shapes in plan view and are in lines along the front-and-rear direction. In other words, the upward beads 34 extending in the front-and-rear direction are formed at the rear floor side panel 32 between plural numbers of the hole portions 36 arrayed in the vehicle width direction.

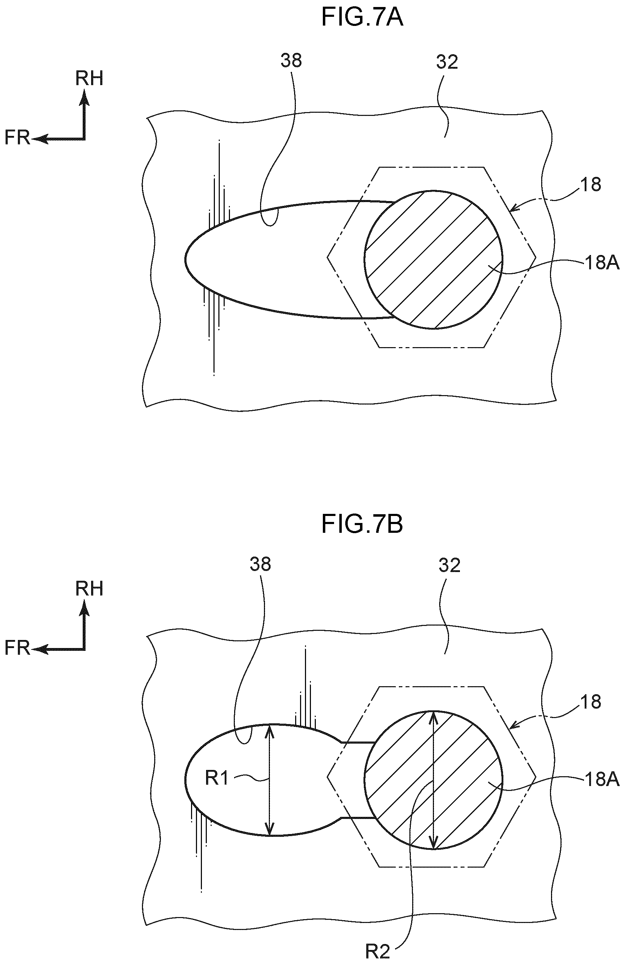

Hole portions at a rear end portion at both the left and right sides of the upward bead 34 that is formed closest to the vehicle width direction inner side of the rear floor side panel 32 are formed as long hole portions 38 with length directions in the vehicle front-and-rear direction. As shown in Fig. 7A, each long hole portion 38 is formed substantially in a water droplet shape in plan view, whose width in the vehicle width direction steadily decreases toward the front side. An inner diameter of a rear end portion of the long hole portion 38 is substantially the same as an outer diameter of a shaft portion 18A of a bolt 18, which serves as a fastening.

The shape of the long hole portion 38 is not limited to the shape shown in Fig. 7A. For example, as shown in Fig. 7B, a front side region of the long hole portion 38 may be formed in a substantially elliptical shape in plan view that has a greater width in the vehicle width direction than a rear side region of the long hole portion 38. A maximum internal diameter R1 in the vehicle width direction of the front side region of the long hole portion 38 shown in Fig. 7B is preferably smaller than the outer diameter R2 of the shaft portion 18A of the bolt 18.

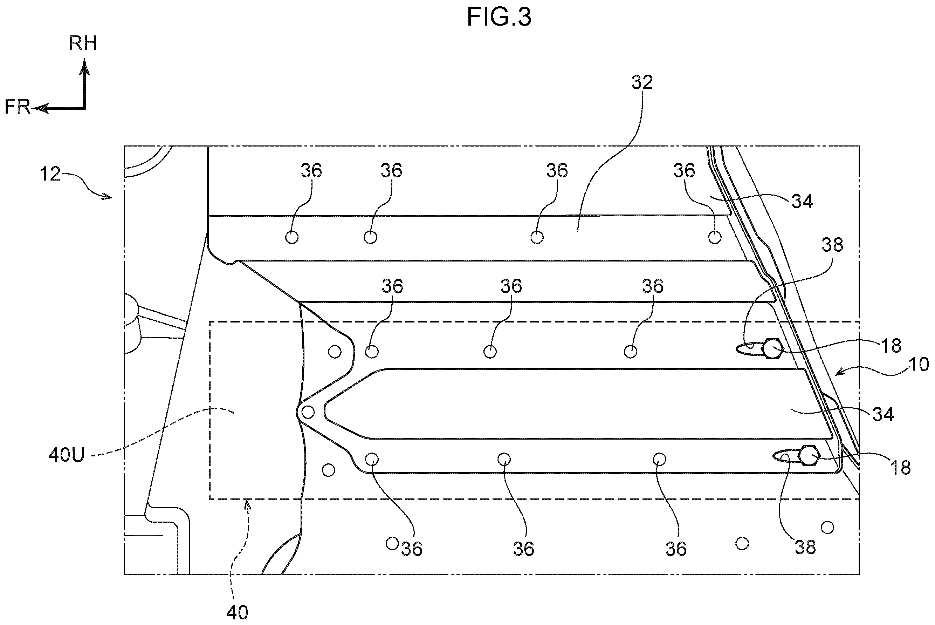

Although not shown in the drawings, each long hole portion 38 may be formed in a substantially rectangular shape in plan view. Regardless of shape, as shown in Fig. 3, the long hole portions 38 and the hole portions 36 are formed at positions that are in lines along the front-and-rear direction, and two of the long hole portions 38 are formed sandwiching the upward bead 34. That is, the long hole portions 38 and hole portions 36 are formed in two rows separated by a predetermined spacing in the vehicle width direction.

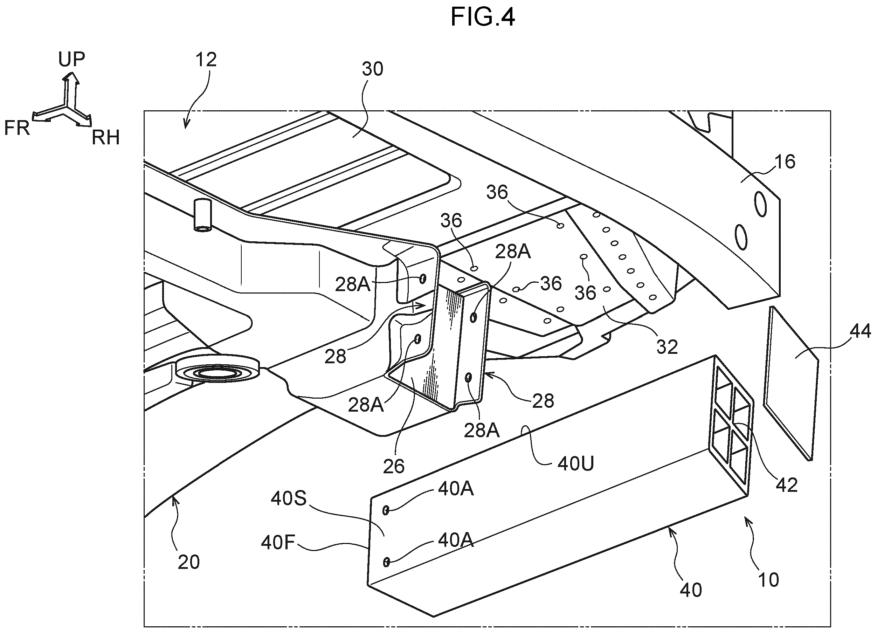

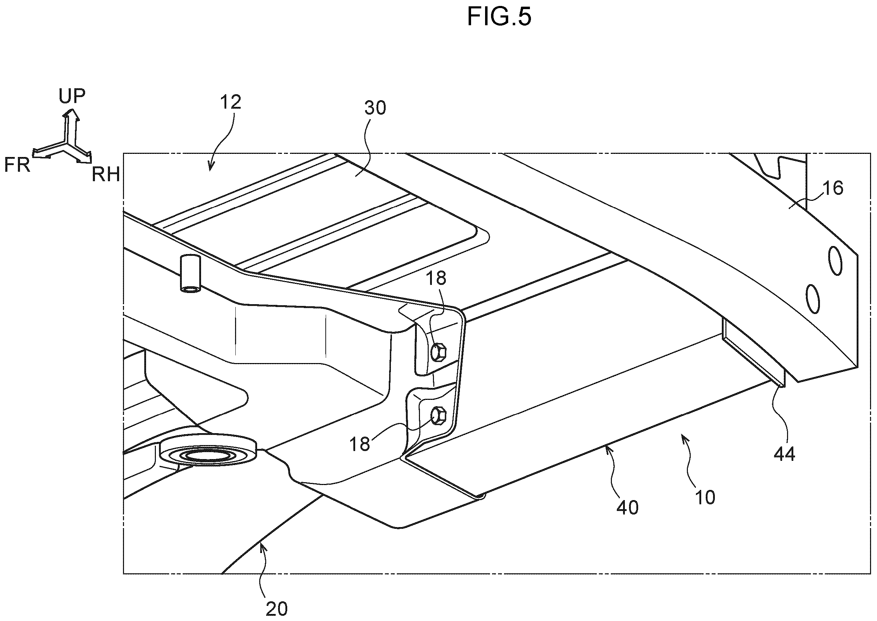

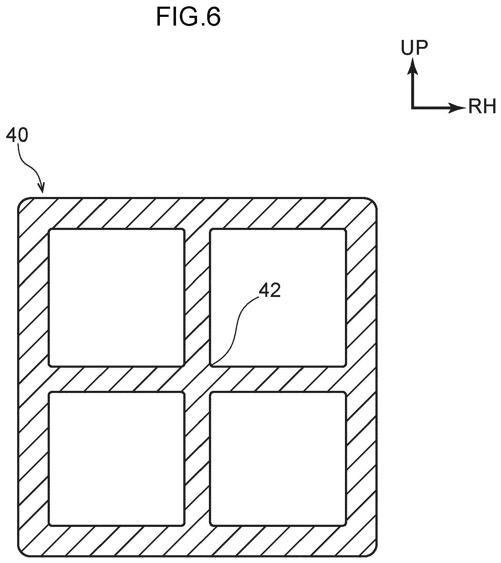

As shown in Fig. 4 and Fig. 5, rear side members 40 are provided at the lower sides of the rear floor side panels 32. Each rear side member 40 serves as a side member that extends in the front-and-rear direction. Described more specifically, as shown in Fig. 6, the rear side member 40 is formed with a substantially rectangular chamber shape in cross section by, for example, extrusion molding of a metal such as an aluminum alloy or the like. A partition portion 42 is integrally formed inside the chamber. Seen in the front-and-rear direction, the partition portion 42 is formed in a "+" shape (partitioning the chamber interior into four rooms).

As shown in Fig. 4, a rear wall 26 is formed integrally at a rear end lower portion (a rear portion) of each vehicle width direction outer side of the vehicle body rear portion 20. The rear wall 26 serves as a wall portion with a flat surface that is substantially perpendicular to the front-and-rear direction. A pair of flange portions 28 in substantially rectangular flat plate shapes are formed integrally at both the left and right sides of the rear wall 26. The flange portions 28 project by predetermined lengths toward the rear side.

A length of each flange portion 28 in the vertical direction is substantially the same as a length of the rear wall 26 in the vertical direction. A spacing between the flange portions 28 (a width of the rear wall 26 in the vehicle width direction) is substantially the same as a width in the vehicle width direction of the rear side member 40. Hole portions 28A for bolt insertion are formed in a vertical row in each flange portion 28.

A front end face 40F of the rear side member 40 (see Fig. 2) is formed as a flat surface that is substantially perpendicular to the front-and-rear direction. A length of the rear side member 40 in the vertical direction is substantially the same as the length in the vertical direction of the rear wall 26 of the vehicle body rear portion 20. Hole portions 40A for bolt insertion are formed in a vertical row at predetermined positions of each of left and right side walls 40S of a front end portion of the rear side member 40.

Accordingly, the rear side member 40 is disposed in a state in which the front end face 40F is abutted against the rear wall 26 of the vehicle body rear portion 20 and the left and right side walls 40S of the front end portion touch the inner sides of the flange portions 28. In this state, the bolts 18 are inserted into the hole portions 28A of the flange portions 28 and the hole portions 40A of the rear side member 40 and are threaded into nuts (not shown in the drawings). Thus, the front end portion of the rear side member 40 is attached to the vehicle body rear portion 20.

In addition, an upper wall 40U of the rear side member 40 is bolt-fastened and attached to the rear floor side panel 32 that is provided at the upper side of the rear side member 40. That is, hole portions for bolt insertion (not shown in the drawings) are formed at plural predetermined positions of the upper wall 40U of the rear side member 40.

Thus, in this structure, the rear floor side panel 32 is fastened to a rear portion of the upper wall 40U of the rear side member 40 by the bolts 18 being inserted into rear end portions (the rear side regions) of the long hole portions 38 and threaded into nuts (not shown in the drawings), and the rear floor side panel 32 is fastened to a middle portion vicinity and a front portion of the upper wall 40U of the rear side member 40 by the bolts 18 being inserted into the hole portions 36 formed to the front sides of the long hole portions 38 and threaded into nuts (not shown in the drawings).

The rear side members 40 are provided as a left and right pair. A support plate 44 is welded and attached to a rear end face of each rear side member 40. Seen in the front-and-rear direction, the support plate 44 is formed with a size that projects a little beyond the rear side member 40. A rear bumper reinforcement 16 has a chamber shape extending in the vehicle width direction. Vehicle width direction outer side end portions of a front wall of the rear bumper reinforcement 16 are attached to the support plates 44 by bolt-fastening or the like.

Thus, in this structure, the rear bumper reinforcement 16 is supported by the left and right pair of rear side members 40. A partition portion 17 (see Fig. 1) is integrally formed at a vertical direction middle portion of the rear bumper reinforcement 16. The partition portion 17 partitions the chamber interior into two rooms, above and below. Thus, a structure is formed in which stiffness of the rear bumper reinforcement 16 with respect to a load applied from the rear side is assured.

Now, operation of the vehicle rear portion structure 10 according to the exemplary embodiment structured as described above is described.

As described above, the rear bumper reinforcement 16 is supported by the left and right pair of rear side members 40. At a time of a rear collision of the vehicle 12 (which may be a light collision), a load is applied to the rear bumper reinforcement 16 and energy is absorbed by the rear bumper reinforcement 16. A load of energy that is not completely absorbed by the rear bumper reinforcement 16 is efficiently distributed between and transmitted to the left and right pair of rear side members 40 from the rear bumper reinforcement 16.

The rear walls 26 with flat surfaces substantially perpendicular to the front-and-rear direction are formed at the rear end lower portions of the vehicle width direction outer sides of the vehicle body rear portion 20. In the state in which the front end face 40F of each of the left and right pair of rear side members 40 is abutted against the corresponding rear wall 26, the left and right side walls 40S of the front end portion of the rear side member 40 are bolt-fastened and attached to the flange portions 28 projecting to the rear side from the left and right sides of the rear wall 26.

Therefore, contact areas of the front end faces 40F of the rear side members 40 with the rear walls 26 of the vehicle body rear portion 20 may be suitably assured, and pressures on the rear walls 26 of the vehicle body rear portion 20 due to the loads applied to the rear side members 40 at the time of rear collision of the vehicle 12 may be reduced. Thus, localized application of the loads to the rear walls 26 of the vehicle body rear portion 20 may be suppressed, and the loads may be taken up by the rear walls 26 of the vehicle body rear portion 20 effectively.

In particular, because each rear side member 40 is formed in a chamber shape, stiffness of the rear side member 40 with respect to the load applied at the time of rear collision of the vehicle 12 may be improved compared to a structure in which the rear side member 40 is not formed in a chamber shape, and an energy absorption amount may be increased.

The partition portion 42 that is formed in the substantial "+" shape as seen in the vehicle front-and-rear direction is integrally formed inside the chamber of the rear side member 40. Therefore, stiffness of the rear side member 40 with respect to the load applied at the time of rear collision of the vehicle 12 may be further improved compared to a structure in which the partition portion 42 is not formed inside the chamber of the rear side member 40, and the energy absorption amount may be increased further.

The vehicle width direction inner side region of each rear floor side panel 32 is provided to the upper side of the rear side member 40. The long hole portions 38 whose length directions are in the front-and-rear direction are formed at the rear end portion of the vehicle width direction inner side region of the rear floor side panel 32. The vehicle width direction inner side region of the rear floor side panel 32 is fastened to the rear portion of the upper wall 40U of the rear side member 40 by the bolts 18 that are inserted into the rear end portions of the long hole portions 38.

Therefore, when a load is applied from the rear bumper reinforcement 16 to the rear side member 40 at the time of rear collision of the vehicle 12, at least the rear portion side of the rear side member 40 moves toward the front side along the long hole portion 38 while undergoing compressive plastic deformation toward the front side (i.e., while absorbing energy). Therefore, a load applied from the rear side member 40 to the rear floor side panel 32 may be reduced, and a load applied from the rear floor side panel 32 to the vehicle body rear portion 20 including, in particular, the wheel house 22 may be reduced.

Thus, compared to a structure in which the upper wall 40U of the rear side member 40 is attached to the rear floor side panel 32 by spot welding or the like and is immovable toward the front side, plastic deformation of the rear floor side panel 32 may be suppressed and plastic deformation of the vehicle body rear portion 20 may be suppressed. Consequently, repair of the vehicle 12 after the rear collision may be achieved just by, for example, replacing the rear bumper reinforcement 16 and the rear side members 40, and is easily manageable.

As illustrated in Fig. 7A, each long hole portion 38 is formed in a shape whose width in the vehicle width direction gradually decreases toward the front side. Therefore, at least the rear portion side of the rear side member 40 may be suitably directed toward the front side by the load applied at the time of rear collision of the vehicle 12, and a load from the shaft portion 18A of the bolt 18 may be transmitted toward the front side effectively.

As illustrated in Fig. 7B, the front side region of the long hole portion 38 may be formed in the elliptical shape that is greater in width along the vehicle width direction than the rear side region. In this structure, at least the rear portion side of the rear side member 40 may be suitably directed toward the front side by the load applied at the time of rear collision of the vehicle 12, and a concentration of stress in the rear floor side panel 32 caused by the shaft portion 18A of the bolt 18 may be reduced.

The rear floor side panel 32 includes the hole portions 36 formed at the front sides of the long hole portions 38, and is also fastened to the rear side member 40 by the bolts 18 that are inserted into the hole portions 36. Therefore, if a large load of a predetermined value or greater is applied from the rear bumper reinforcement 16 to the rear side member 40 at the time of rear collision of the vehicle 12, the load may be transmitted from the rear side member 40 to the rear floor side panel 32 efficiently, and may be transmitted from the rear floor side panel 32 to the vehicle body rear portion 20 efficiently.

That is, when the vehicle 12 receives a rear collision in which a large load of the predetermined value or greater is applied, in addition to plastic deformation of the rear side members 40, energy may be absorbed efficiently by plastic deformation of the rear floor side panels 32 and plastic deformation of the vehicle body rear portion 20. Thus, the vehicle 12 according to the present exemplary embodiment may utilize the rear floor side panels 32 and the vehicle body rear portion 20 as energy-absorbing members in addition to the rear side members 40.

When the vehicle 12 is running on a bad road that is extremely uneven or the like, and a load is applied from the lower side, stiffness of each rear floor side panel 32 with respect to this load may be assured. Therefore, relative displacement with respect to the vehicle body rear portion 20 (deformation) of the rear floor side panel 32 if the rear floor side panel 32 had low stiffness may be suppressed, and occurrences of high stress in regions of the rear floor side panel 32 that are fastened by the bolts 18 may be suppressed.

In addition, because plural numbers of the hole portions 36 are formed in the front-and-rear direction, the stiffness of the rear floor side panel 32 with respect to the load applied from the lower side may be more effectively assured than in a structure in which only single hole portions 36 are formed. Thus, relative displacement of the rear floor side panel 32 with respect to the vehicle body rear portion 20 may be suppressed.

Each of the long hole portion 38 and hole portions 36 are formed at positions that are in line along the front-and-rear direction. Therefore, at a time of a rear collision of the vehicle 12, a load may be transmitted from the rear side member 40 to the rear floor side panel 32 more efficiently and transmitted from the rear floor side panel 32 to the vehicle body rear portion 20 more efficiently than in a structure in which the long hole portion 38 and hole portions 36 are formed to be offset in the vehicle width direction from positions that are in line along the front-and-rear direction.

The long hole portions 38 and hole portions 36 are formed in two rows (separated by a predetermined spacing in the vehicle width direction) sandwiching each upward bead 34. Therefore, even if a large load of a predetermined value or greater is applied from the rear bumper reinforcement 16 to the rear side member 40 at the time of rear collision of the vehicle 12, the load may be transmitted from the rear side member 40 to the rear floor side panel 32 more efficiently and transmitted from the rear floor side panel 32 to the vehicle body rear portion 20 more efficiently than in a structure in which only one row of the long hole portion 38 and hole portions 36 is formed.

Because the long hole portions 38 and hole portions 36 are formed in two rows (separated by the predetermined spacing in the vehicle width direction) sandwiching the upward bead 34, stiffness of the rear floor side panel 32 with respect to a load applied from the lower side may be assured effectively, and relative displacement of the rear floor side panel 32 with respect to the vehicle body rear portion 20 may be suppressed effectively.

In other words, because the rear floor side panel 32 includes the upward bead 34 extending in the front-and-rear direction between the long hole portions 38 and between the hole portions 36, stiffness of the rear floor side panel 32 with respect to the load applied from the lower side may be assured more effectively than in a structure in which the upward bead 34 extending in the front-and-rear direction is not formed at the rear floor side panel 32, and relative displacement of the rear floor side panel 32 with respect to the vehicle body rear portion 20 may be suppressed more effectively.

### - Variant Example -

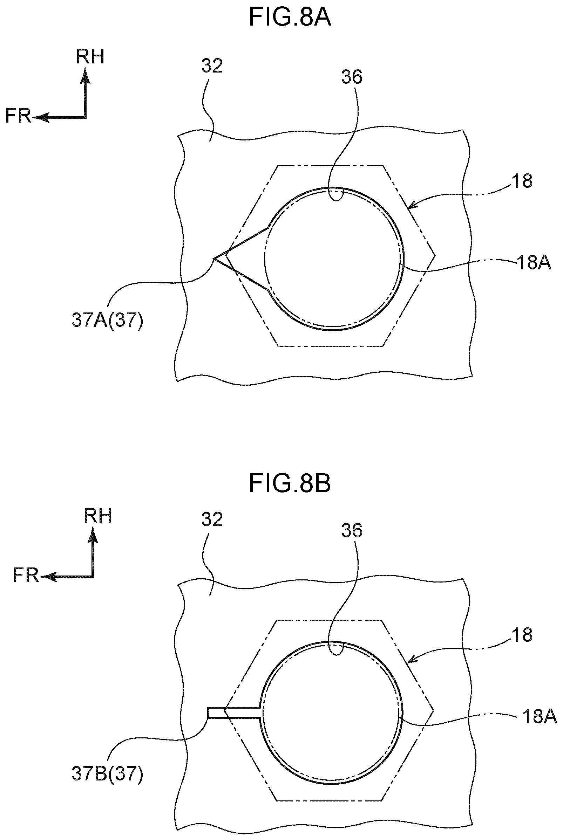

As shown in Fig. 8A and Fig. 8B, instead of the long hole portions 38, the hole portions 36 may be formed at rear end portions at both left and right sides of the upward bead 34 at the vehicle width direction inner side region of each rear floor side panel 32. A weakened portion 37 may be formed at an edge portion at the front side of each of these hole portions 36. The weakened portion 37 is for allowing rupturing of the rear floor side panel 32 by the shaft portion 18A of the bolt 18 when a load is applied to the rear side member 40 from the rear side.

For example, as shown in Fig. 8A, the weakened portion 37 is structured as a notch portion 37A that is continuous with the hole portion 36 and has a substantial isosceles triangle shape in plan view. However, the weakened portion 37 is not limited to the notch portion 37A. For example, as shown in Fig. 8B, the weakened portion 37 may be structured as an incision portion 37B that is continuous with the hole portion 36 and extends in the front-and-rear direction with a predetermined length and width.

When this weakened portion 37 (the notch portion 37A, incision portion 37B or the like) is formed at the front sides of the hole portions 36 at the rear end portions at both left and right sides of the upward bead 34 at the vehicle width direction inner side region of the rear floor side panel 32, then when a load is applied to the rear side member 40 at a time of a rear collision of the vehicle 12, at least the rear portion side of the rear side member 40 may move toward the front side while undergoing compressive plastic deformation toward the front side (i.e., while absorbing energy) and while the weakened portions 37 are ruptured by the shaft portions 18A of the bolts 18 fastened at the rear portion of the upper wall 40U.

Therefore, at the time of rear collision of the vehicle 12, a load applied from the rear side member 40 to the rear floor side panel 32 may be reduced and plastic deformation of the rear floor side panel 32 may be suppressed. Thus, a load applied from the rear floor side panel 32 to the vehicle width direction outer side region of the vehicle body rear portion 20 including, in particular, the wheel house 22 may be reduced, and plastic deformation of the vehicle body rear portion 20 may be suppressed.

Hereabove, the vehicle rear portion structure 10 according to the present exemplary embodiment has been described in accordance with the attached drawings. However, the vehicle rear portion structure 10 according to the present exemplary embodiment is not limited to the illustrated structures; suitable design modifications may be applied within a scope not departing from the gist of the present invention. For example, the rear floor side panel 32 is not limited to being structured by a single panel but may be structured by two overlapping panels.

Further, depending on the width of the upper wall 40U of each rear side member 40 in the vehicle width direction, the width of each upward bead 34 in the vehicle width direction and the like, just one of the long hole portions 38 may be provided, or three or more of the long hole portions 38 may be provided in the vehicle width direction. That is, although it is preferable if the long hole portions 38 and hole portions 36 for bolt-fastening the rear floor side panel 32 to the upper wall 40U of the rear side member 40 are formed in two rows separated by a predetermined spacing in the vehicle width direction, a mode is applicable in which only one row is formed.

Further yet, the upward bead 34 may be formed so as to extend toward the front side from between the hole portions 36 that are furthest to the rear side without being formed between the long hole portions 38. The partition portion 42 is not limited to the mode that is formed in a substantial "+" shape as seen in the front-and-rear direction. The flange portions 28 may project toward the rear side from both the upper and lower sides of the rear wall 26 rather than from the left and right sides, and may project toward the rear side from the left and right sides and from the lower side.

## Claims

1. A vehicle rear portion structure (10) comprising:
a framework member (20) that is integrally molded by casting and that structures a rear portion of a vehicle body;
a side member (40) that extends in a vehicle front-and-rear direction and that is attached to a rear portion of the framework member (20); and
a floor member (32) that is provided at a vehicle upper side of the side member (40) and that includes a long hole portion (38) with a length direction in the vehicle front-and-rear direction,
wherein the floor member (32) is fastened to the side member (40) by a fastening (18) inserted into a vehicle rear side region of the long hole portion (38).

2. The vehicle rear portion structure (10) according to claim 1, wherein the floor member (32) includes a hole portion (36) at a vehicle front side of the long hole portion (38), and the floor member (32) is fastened to the side member (40) by a fastening (18) inserted into the hole portion (36).

3. The vehicle rear portion structure (10) according to claim 2, wherein the long hole portion (38) and the hole portion (36) are formed at positions that are in line along the vehicle front-and-rear direction.

4. The vehicle rear portion structure (10) according to claim 2 or 3, wherein a plurality of hole portions (36) are formed in the vehicle front-and-rear direction.

5. The vehicle rear portion structure (10) according to claim 4, wherein the long hole portion (38) and the hole portions (36) are formed in at least two rows separated by a spacing in a vehicle width direction.

6. The vehicle rear portion structure (10) according to claim 5, wherein the floor member (32) includes a bead portion (34) that extends in the vehicle front-and-rear direction between a plurality of long hole portions (38), between the hole portions (36), or between any combination thereof.

7. The vehicle rear portion structure (10) according to any one of claims 1 to 6, wherein the side member (40) is formed as a closed cross-sectional shape.

8. The vehicle rear portion structure (10) according to claim 7, wherein the side member (40) includes a partition portion (42) inside the closed cross-section.

9. The vehicle rear portion structure (10) according to claim 7, wherein:
a wall portion (26) and a flange portion (28) are formed at a rear portion of the framework member (20), the wall portion (26) being perpendicular to the vehicle front-and-rear direction, and the flange portion (28) protruding toward a vehicle rear side, and
the side member (40) is attached to the flange portion (28) in a state in which the side member (40) abuts against the wall portion (26).

10. The vehicle rear portion structure (10) according to claim 7, wherein the side member (40) is provided in a pair at left and right, and the side members (40) support a bumper reinforcement (16) that extends in a vehicle width direction.

11. The vehicle rear portion structure (10) according to any one of claims 1 to 6, wherein the long hole portion (38) is formed in a shape whose width in a vehicle width direction decreases toward a vehicle front side.

12. The vehicle rear portion structure (10) according to any one of claims 1 to 6, wherein a vehicle front side region of the long hole portion (38) is formed in an elliptical shape with a greater width in a vehicle width direction than the vehicle rear side region.

13. A vehicle rear portion structure (10) comprising:
a framework member (20) that is integrally molded by casting and that structures a rear portion of a vehicle body;
a side member (40) that extends in a vehicle front-and-rear direction and that is attached to a rear portion of the framework member (20); and
a floor member (32) that is provided at a vehicle upper side of the side member (40) and that includes a hole portion (36),
wherein:
the floor member (32) is fastened to the side member by a fastening (18) inserted into the hole portion (36), and
a weakened portion (37) is formed at an edge portion at a vehicle front side of the hole portion (36), the weakened portion (37) allowing the floor member (32) to be ruptured by the fastening (18) when a load is applied from a vehicle rear side.
